# EUROPEAN PATENT APPLICATION

(11) **EP 1 146 215 A2**
(43) Date of publication of application: **17.10.2001**
(21) Application number: 00117738.5
(22) Date of filing: 17.08.2000
(51) Int. Cl.: F02D 31/00, F02D 37/02

(54) **Method and apparatus for controlling an internal combustion engine**

(30) Priority: 10.04.2000 KR 0018596
(71) Applicant: Lee, Joo-Hyoung, Kyoungki-Do (KR)
(72) Inventor: Lee, Joo-Hyoung, Kyoungki-Do (KR)
(74) Representative: Viering, Jentschura & Partner

(57) **Abstract**

Based on rotational speed information on a rotational speed of an internal combustion engine, it is discriminated whether or not the rotation speed of the internal combustion engine increases to be out of control to generate a control signal and the rotational speed causes to be decreased based on the control signal.

## Description

### Field of the Invention

The present invention relates to a method and apparatus for controlling an internal combustion engine; and more particularly, to a method and apparatus for preventing the internal combustion engine from accelerating to be out of control.

### Description of the Prior Art

In a spark ignition internal combustion engine, an ignition timing of ignition spark event is critical for best fuel economy and low exhaust emission of environmentally hazardous gases. Correct spark timing is dependent on a rotational speed of the engine and load. Some engines with automatic transmission have been equipped with microprocessor-controlled systems, e.g., electronic control units(ECU), which includes sensors for engine rotational speed, intake air temperature and pressure, engine temperature and exhaust gas oxygen content.

However, the microprocessor's determination of proper ignition spark timing does not always provide optimum engine performance. For example, especially, the minute the vehicle starts to move, the malfunctions of the microprocessor-controlled system may cause the rotational speed of the internal combustion engine to increase to be out of control and, therefore, forces the vehicle to dash forward suddenly

Moreover, even though the vehicle plunges out of the road suddenly from the malfunction of the microprocessor-controlled system, the internal combustion engine continues to make active so the steering wheel, the break pedal and so on need to be manipulated in order to prevent secondary accidents from bringing about.

### Summary of the Invention

It is, therefore, an object of the present invention to provide a method and apparatus for preventing the internal combustion engine from accelerating to be out of control without snubbing quickly.
In accordance with an aspect of the present invention, there is provided a method for controlling an internal combustion engine, comprising the steps of:
obtaining rotational speed information on a rotational speed of said internal combustion engine;
determining whether or not said rotation speed of said internal combustion engine increases to be out of control based on said rotational speed information to generate a control signal, wherein said control signal represents said combustion engine increases to be out of control; and
causing said rotational speed to be decreased based on said control signal.

### Brief Description of the Drawings

The above and other objects and features of the present invention will become apparent from the following description of preferred embodiments given in conjunction with the accompanying drawings, in which:
Fig. 1 represents a block diagram of an apparatus for preventing an internal combustion engine from accelerating to be out of control in accordance with the present invention;
Fig. 2 shows a block diagram of an apparatus for controlling an ignition period of the internal combustion engine in accordance with the present invention; and
Fig. 3 is a flow chart for illustrating a procedure for preventing the internal combustion engine from accelerating to be out of control in accordance with the present invention.

### Detailed Description of the Preferred Embodiments

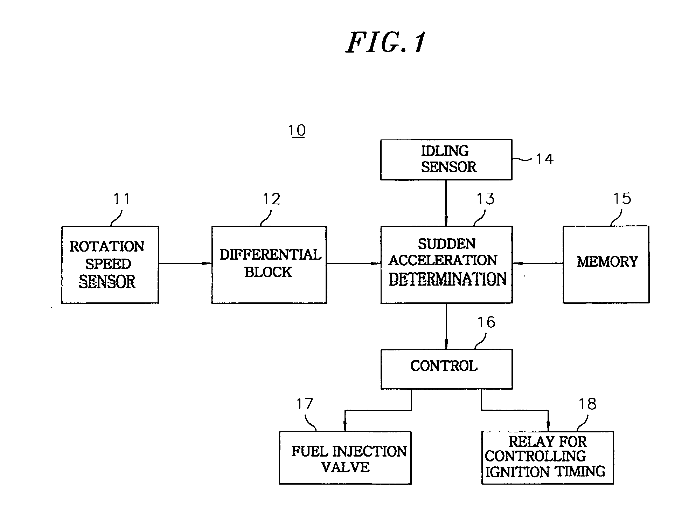

Referring to Fig. 1, there is illustrated a block diagram of an apparatus for preventing an internal combustion engine from accelerating to be out of control in accordance with the present invention.

A rotational speed sensor 11 of the internal combustion engine measures a rotational speed of the internal combustion engine. The rotational speeds are preferably measured indirectly. In other word, the measurement of the rotational speed should have little effect on the internal combustion engine itself. Since most sudden acceleration of the internal combustion engine results from malfunctions of the electronic control unit(ECU), the rotational speed in accordance with the present invention are preferably measured by techniques different from those of the rotational speed provided to the electronic control unit. If necessary, the rotational speed itself can be replaced with an equivalent value thereto, e.g., a voltage and so like.

Information on the rotational speed is delivered to a differential block 12, which defines a derivative, i.e., a differential value, of the rotational speed with respect to time based on the information on the rotational speed. The derivative of the rotational speed is provided to a sudden acceleration determination block 13.

In the meantime, an idling sensor 14 observes whether or not the internal combustion engine is idle. Generally, an accelerator pedal is arranged at a floor surface of a driver's compartment of a vehicle on which the internal combustion engine is mounted. The accelerator pedal is biased to an idling position by a spring and oscillated in response to a pressing of a driver. Therefore, a pressing amount of the accelerator pedal is sensed by the idling sensor 14 comprised of a potentiometer installed at the oscillating shaft of the accelerator pedal. The pressing amount of the accelerator pedal is provided to the sudden acceleration determination block 13.

By comparing the derivative of the rotational speed with a predetermined value, the sudden acceleration determination block 13 discriminates whether or not the rotational speed is required to be further controlled. Specifically, it is discriminated if the derivative Nᵥ of the rotational speed is larger than the predetermined rotational derivative B for idling operation, wherein the predetermined rotational derivative B has been experimentally determined and stored in a memory 15. If the derivative Nᵥ of the rotational speed is larger than the predetermined rotational derivative B, the sudden acceleration determination block 13 generates a control signal, wherein the control signal will cause the rotational speed of the internal combustion engine to be decreased. The control signal is delivered to a control block 16.

The control block 16 generates a plurality of manipulation signals for manipulating a fuel injection valve 17 and a relay 18, wherein the manipulation signals includes an injection reduction signal for the fuel valve 17 and an ignition relay signal for the relay 18. Specifically, the injection reduction signal is delivered to the fuel injection valve 17 to release a smaller fuel for each ignition event. The ignition relay signal is delivered to the relay 18 for controlling ignition timing to cause the ignition spark plug to be sparked with a longer timing period.

Accordingly, in case the rotational speed increases abnormally, the combustion engine continues to make active so a steering wheel, a break pedal and so on can be manipulated.

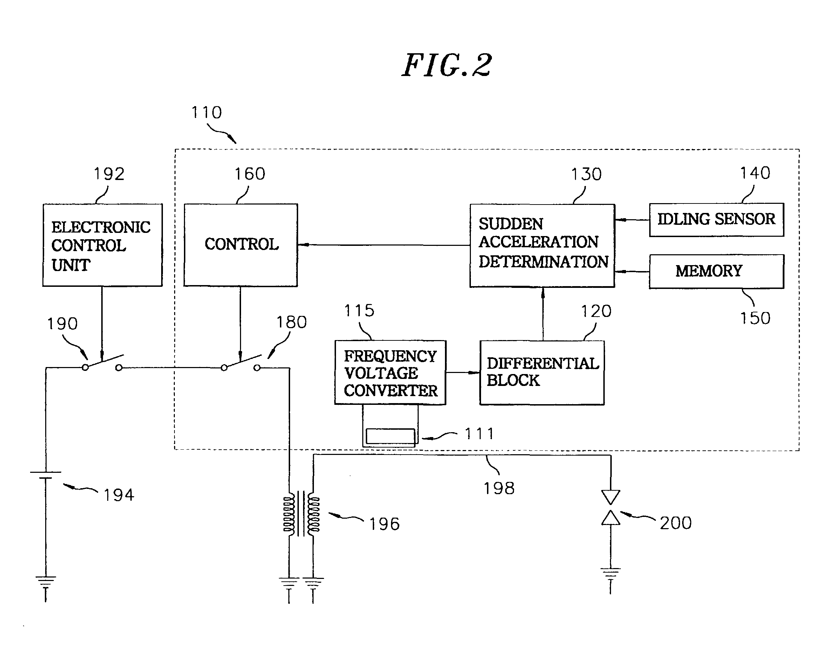

Referring to Fig. 2, there is shown a block diagram of an apparatus for controlling an ignition period of the internal combustion engine in accordance with the present invention.

A spark ignition transformer 196 is commonly used to generate a high voltage needed to create an arc across the gap of a spark plug 200 for igniting the fuel and air mixture, wherein the spark ignition a primary coil for low voltage excitation and a secondary coil for a high voltage output to be fed to the spark plug 200. A high voltage is generated in the secondary coil within a short period of time following excitation thereof.

One end of the primary coil of the spark ignition transformer 196 is grounded and the other end thereof is connected serially to a power supply 194, a switch 190 and a relay 180. The power supply 194 provides electrical energy to all components of the apparatus and the switch 190 controlled by an electronic control unit 192 causes the electrical energy to be provided intermittently to all the components of the apparatus.

A magnetic flux detection coil 111 is preferably located in the vicinity of a spark plug cable 198 connected to the secondary coil for a high voltage output to be fed to the spark plug 200 in accordance with the present invention. The magnetic flux detection coil 111 detects a variation of magnetic flux generated around the spark plug cable 198. If necessary, the magnetic flux detection coil 111 may be located at the primary coil, not the secondary coil. Since the high voltage is fed to the spark plug 200 according to the intermittent operation of the switch 190 as described above, the period of the variation of the magnetic flux around the spark plug cable 198 is equal to that of the switch 190.

A frequency voltage converter 115 converts the period of the variation of the magnetic flux into a voltage. The voltage is preferably proportion to the rotational speed. Information on the voltage is provided to a differential block 120, which defines a derivative of the voltage with respect to time. The derivative of the voltage is provided to a sudden acceleration determination block 130.

In the meantime, an idling sensor 140 observes whether or not the internal combustion engine is idle. The above observing result is provided to the sudden acceleration determination block 130.

By comparing the derivative of the voltage with a predetermined value, the sudden acceleration determination block 130 discriminates whether or not the rotation speed, i.e., the ignition time of the spark plug, is required to be further controlled. Specifically, it is discriminated if the derivative of the voltage is larger than the predetermined voltage derivative for idling operation, wherein the predetermined voltage derivative has been experimentally determined and stored in a memory 150. If the derivative of the voltage is larger than the predetermined voltage derivative, the sudden acceleration determination block 130 generates a control signal. The control signal is delivered to a control block 160.

The control block 160 generates an ignition relay signal for controlling the relay 180. The ignition relay signal causes the relay 180 to be further operated so that the ignition spark plug may be sparked with a longer timing period.

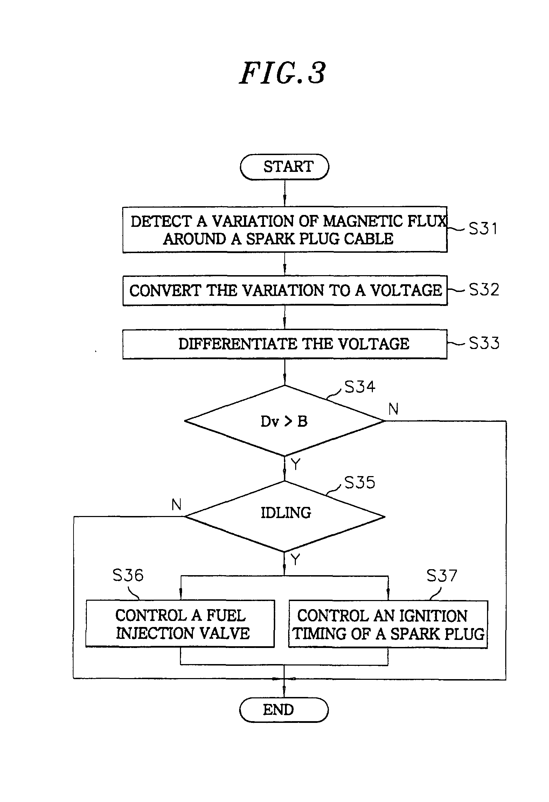

Referring to Fig. 3, there is shown a flow chart for illustrating a procedure for preventing the internal combustion engine from accelerating to be out of control in accordance with the present invention.

At first, at step S31, a variation of magnetic flux is detected around a spark plug cable.

At step S32, the variation of magnetic flux is converted to a voltage, wherein the voltage is proportional to the rotational speed.

At step S33, the voltage is differentiated with respect to time to generate a derivative of the voltage.

At step S34, the derivative Dᵥ of the voltage is compared with a predetermined differential voltage B. If the derivative Dᵥ of the voltage is larger than the predetermined differential voltage B, the procedure goes to step S35 and, if otherwise, the procedure goes to end.

At step S35, it is discriminated whether or not the internal combustion engine is idle by detecting the movement of the acceleration pedal. If the internal combustion engine is idle, the procedure goes to steps S36 and S37. If necessary, either step S36 or step S37 may be performed.

At step S36, a fuel injection valve is controlled to release a smaller fuel for each ignition event. At step S37, the relay for controlling an ignition spark time is controlled to cause the ignition spark plug to be sparked with a longer timing period.

While the present invention has been described with respect to the particular embodiments, it will be apparent to those skilled in the art that various changes and modifications may be made without departing from the spirit and scope of the invention as defined in the following claims.

## Claims

1. A method for controlling an internal combustion engine, comprising the steps of:
obtaining rotational speed information on a rotational speed of said internal combustion engine;
determining whether or not said rotation speed of said internal combustion engine increases to be out of control based on said rotational speed information to generate a control signal, wherein said control signal represents said combustion engine increases to be out of control; and
causing said rotational speed to be decreased based on said control signal.

2. The method of claim 1, further comprising the step of:
observing whether or not said internal combustion engine is idle to generate an idling signal;
modifying the control signal to a modified control signal based on the idling signal; and
replacing the control signal with the modified control signal.

3. The method of claim 1, wherein said determining step includes the steps of:
generating differential rotational speed information based on said rotational speed information, wherein said differential rotational speed information corresponds to a differential value of said rotational speed; and
comparing said differential rotational speed information with a predetermined value to generate said control signal.

4. The method of claim 3, wherein said control signal represents that said differential value of said rotational speed is larger than the predetermined value.

5. The method of claim 1, wherein said obtaining step includes the steps of:
detecting a variation of magnetic flux in the vicinity of a spark plug cable for a high voltage output to be fed to a spark plug;
converting the variation of the magnetic flux to a voltage relevant thereto; and
estimating said rotational speed information based on the voltage.

6. The method of claim 1, wherein said causing step includes the step of controlling a fuel injection valve, whereby a smaller fuel is provided to said internal combustion engine.

7. The method of claim 1, wherein said causing step includes the step of controlling an ignition period of a spark plug, whereby the ignition period becomes larger.

8. An apparatus for controlling an internal combustion engine, comprising:
rotational speed sensor for obtaining rotational speed information on a rotational speed of said internal combustion engine;
means for determining whether or not said rotation speed of said internal combustion engine increases rapidly based on said rotational speed information to generate a control signal, wherein said control signal represents said combustion engine increases rapidly; and
means for causing said rotational speed to be decreased based on said control signal.

9. The apparatus of claim 1, further comprising:
means for observing whether or not said internal combustion engine is idle to generate an idling signal;
means for modifying the control signal to a modified control signal based on the idling signal; and
means for replacing the control signal with the modified control signal.

10. The apparatus of claim 1, wherein said means for determining includes:
differential block for generating differential rotational speed information based on said rotational speed information, wherein said differential rotational speed information corresponds to a differential value of said rotational speed; and
comparator for comparing said differential rotational speed information with a predetermined value to generate said control signal.

11. The apparatus of claim 3, wherein said control signal represents that said differential value of said rotational speed is larger than the predetermined value.

12. The apparatus of claim 1, wherein said rotational speed sensor includes:
magnetic flux detector for detecting a variation of magnetic flux in the vicinity of a spark plug cable for a high voltage output to be fed to a spark plug;
converter for converting the variation of the magnetic flux to a voltage relevant thereto; and
means for estimating said rotational speed information based on the voltage.

13. The apparatus of claim 1, wherein said means for causing includes means for controlling a fuel injection valve, whereby a smaller fuel is provided to said internal combustion engine.

14. The method of claim 1, wherein said means for causing includes means for controlling an ignition period of a spark plug, whereby the ignition period becomes larger.
